# EUROPÄISCHE PATENTSCHRIFT

(11) **EP 3 204 206 B1**
(45) Veröffentlichungstag und Bekanntmachung des Hinweises auf die Patenterteilung: **09.12.2020**
(21) Anmeldenummer: 15777671.7
(22) Anmeldetag: 06.10.2015
(51) Int. Cl.: B29C 67/24, B29C 70/48, B29C 45/02, B29C 45/46, B29C 45/14, B29C 45/16, B29K 105/06, B29K 63/00, B29K 75/00, B29K 77/00

(54) **VERFAHREN UND VORRICHTUNG ZUR HERSTELLUNG VON VERSTÄRKTEN KUNSTSTOFF-BAUTEILEN**
METHOD AND APPARATUS FOR THE PRODUCTION OF REINFORCED PLASTIC PARTS
PROCÉDÉ ET DISPOSITIF DE FABRICATION DE COMPOSANTS EN PLASTIQUE RENFORCÉ

(30) Priorität: 07.10.2014 EP 14187994
(43) Veröffentlichungstag der Anmeldung: 16.08.2017
(73) Patentinhaber: BASF SE, 67056 Ludwigshafen (DE)
(72) Erfinder: BEM, Roman, 68163 Mannheim (DE); JAKOBI, Reinhard, 67133 Maxdorf (DE); DESBOIS, Philippe, 68535 Edingen-Neckarhausen (DE)
(86) Internationale Anmeldenummer: PCT/EP2015/073043
(87) Internationale Veröffentlichungsnummer: WO 2016/055473

(56) Entgegenhaltungen:
- EP-A1- 1 415 793
- EP-A2- 1 375 591
- DE-A1-102007 041 678
- DE-A1-102008 047 564
- US-A1- 2007 182 048
- HENNISSEN M B: "AUTOMOTIVE APPLICATIONS OF EPOXY RESIN TRANSFER MOULDING", INGENIEURS DE L'AUTOMOBILE, EDITIONS VB, GARCHES, FR, Nr. 722, 1. Juni 1998 (1998-06-01), Seiten 40,42-45, XP000774743, ISSN: 0020-1200

## Beschreibung

Die vorliegende Erfindung betrifft ein Verfahren und eine Vorrichtung zur Herstellung von verstärkten Kunststoff-Bauteilen aus zumindest einem Edukt als reaktives System und zumindest einem Verstärkungsmaterial.

Die Verarbeitung reaktiver Systeme ist üblicherweise mit einer relativ komplexen Prozessführung verbunden. Insbesondere die Gemischeinstellung (das Verhältnis der Edukte, Aktivatoren, Katalysatoren und deren Durchmischung) sowie die Abschirmung des Systems gegen Umwelteinflüsse (z.B. Feuchtigkeit, Licht) sind für die Qualität des Bauteils und dessen Reproduzierbarkeit entscheidend. Die verwendeten Komponenten müssen in der Regel "trocken", d.h. unter Ausschluss störender Medien verarbeitet werden. Die komplexe Prozessführung erfordert oft größere Investitionen in die Maschinentechnik und umfassendes Know-How seitens der Verarbeiter. Die eingeschränkte Flexibilität aufgrund des hohen Reinigungsaufwands beim Komponentenwechsel führt ggf. zu einer geringen Anlagenauslastung. Lange Zykluszeiten schränken zudem die weitere Verbreitung der Technologien des Reaction-Injection-Moulding (RIM) bzw. des Resin-Transfer-Moulding (RTM) ein.

Das RIM-Verfahren ist ein seit langem bekanntes Verfahren, das auch in einschlägigen Standardwerken beschrieben ist (vgl. bspw. Domininghaus, Hans und Elsner, Peter und Eyerer, Peter und Hirth, Thomas (Hrsg.), Kunststoffe: Eigenschaften und Anwendungen, 7. Auflage, Springer-Verlag, Berlin Heidelberg, 2008). Die flüssigen Reaktionskomponenten werden in beheizten Behältern gelagert und von Präzisionspumpen über beheizte Leitungen in einen Mischkopf gefördert. In einigen Fällen zirkuliert das reaktive System zwischen Mischkopf und Behälter. Bei dem Verfahren ist eine Materialumstellung komplex und erfordert einen hohen Reinigungsaufwand beispielsweise der Behälter, der Dosierpumpen, der Förderleitungen und der Mischköpfe. Dadurch entstehen auch hohe Abfallmengen an Edukten, da die Reaktivität durch lange Verweilzeit bei hohen Temperaturen gemindert wird. Andererseits muss ein Luftkontakt (und damit eine Oxidation) der einzelnen Systemkomponenten vermieden werden, da ansonsten das System nicht genügend reagiert und ein hoher Restmonomergehalt im Bauteil verbleibt. Um Behälter, Pumpen, Förderleitungen und Mischköpfe auf einer konstanten Temperatur zu halten, ist weiterhin ein hoher Energiebedarf für die Beheizung der einzelnen Anlagenteile nötig. In DE 23 61 452 A1 wird ein Sonderverfahren beschrieben, bei dem die Dosierpumpen zwei reaktive Komponenten direkt über Einspritzdüsen in das Werkzeug fördern, in welchem sie dann im Gegenstromprinzip miteinander vermischt werden. Auch in diesem Fall ist eine Materialumstellung mit den gleichen Problemen wie vorstehend beschrieben verbunden.

In EP 2 572 851 A1 wird ein Verfahren zur Herstellung von thermoplastischen Faserverbundkunststoffen in einer Spritzgussmaschine beschrieben. Hier liegen die beiden Komponenten in monomerer Form getrennt in zwei Spritzgussaggregaten vor. Eine Komponente enthält den Aktivator, die andere den Katalysator. Die Aggregate dienen sowohl der Aufheizung der Komponenten als auch der Förderung der Komponenten zur Mischkammer. Für einen reibungslosen Ablauf müssen die Aggregate geneigt eingebaut sein. Üblicherweise sind die Aggregate auch über Schlauchleitungen mit der Mischkammer und dem Werkzeug verbunden. Die Spritzgussmaschine ist in einer Sonderbauweise ausgeführt und erfordert daher hohe Investitionen. Die Maschine lässt sich ausschließlich für RIM-Verfahren einsetzen. Sie kann in der beschriebenen Form nicht für Standard-Anwendungen im Spritzguss genutzt werden. Dabei besteht einerseits das Problem, dass fluide Systeme sich schwer mit Schnecken fördern lassen, andererseits Einspritzsysteme mit Kolben sehr empfindlich hinsichtlich der sehr niedrigviskosen Monomersysteme sind.

Die US 2007/0182048 A1 offenbart zwar eine Kavität, darin wird jedoch kein Verstärkungsmaterial bereitgestellt. Vielmehr werden einige Verstärkungsfasern mit einem Harz im ersten Einspritzabschnitt gemischt, der mit einem Trichter und einer rotierenden Schnecke versehen ist. Folglich werden die Fasern zusammen mit dem Harz in die Kavität eingespritzt. Die Bereitstellung eines zweidimensionalen Verstärkungsmaterials wie beispielsweise eine Fasermatte in der zu füllenden Kavität ist nicht möglich. 1

Vor diesem Hintergrund liegt der vorliegenden Erfindung die Aufgabe zugrunde, die Nachteile des Standes der Technik zu überwinden und ein Verfahren anzugeben, mit dem Edukte in einfacher Weise sicher zu verstärkten Kunststoff-Bauteilen verarbeitet werden können. Es ist ferner die Aufgabe der vorliegenden Erfindung, eine entsprechende Vorrichtung zur Herstellung von verstärkten Kunststoff-Bauteilen bereitzustellen.

Diese Aufgabe wird in einem ersten Aspekt der vorliegenden Erfindung durch ein Verfahren zur Herstellung von verstärkten Kunststoff-Bauteilen gemäss dem Anspruch 1 gelöst, das die Schritte umfasst:
a) bereitstellen von zumindest einem verstarkungsmaterial in zumindest einer Kavitat (16, 24, 43) einer Abformvorrichtung (11, 21, 41),
b) Bereitstellen von zumindest einem Edukt in einem Behälter (100),
c) Einsetzen des Behälters (100) in die Abformvorrichtung (11, 21, 41),
d) Einbringen des zumindest einen Edukts aus dem Behälter (100) direkt in die Kavität (16, 24, 43), wobei das zumindest eine Edukt eine Mischeinheit (3) durchläuft, die Teil des Behälters (100) ist, wobei das zumindest eine Verstärkungsmaterial von dem zumindest einen Edukt zumindest teilweise durchdrungen wird,
e) Aushärten des zumindest einen Edukts mit dem zumindest einen Verstärkungsmaterial zu einem verstärkten Kunststoff-Bauteil und
f) Entformen des verstärkten Kunststoff-Bauteils.

In einem zweiten Aspekt der vorliegenden Erfindung wird die Aufgabe durch eine Vorrichtung zur Herstellung von verstärkten Kunststoff-Bauteilen gemäss dem Anspruch 12 gelöst, umfassend
- zumindest eine Kavität (16, 24, 43) einer Abformvorrichtung (11, 21, 41) zur Aufnahme eines Verstärkungsmaterials,
- eine Aufnahmevorrichtung für zumindest einen Behälter (100) für zumindest ein Edukt, wobei der Behälter (100) sowohl für die Lagerung als auch für den Transport und für das Einbringen des zumindest einen Edukts in die Kavität (16, 24, 43) ausgelegt ist,
- eine Ausbringvorrichtung (4) zum Ausbringen des zumindest einen Edukts aus dem Behälter (100) heraus direkt in die Kavität (16, 24, 43) und
- eine Mischeinheit (3), die Teil des Behälters (100) ist, für das zumindest eine Edukt, die zwischen der Aufnahmevorrichtung und der Kavität (16, 24, 43) angeordnet ist.

Die vorliegende Erfindung weist u.a. den Vorteil auf, dass sie die Flexibilität von bekannten RIM-/RTM-Verfahren deutlich erhöht, indem unterschiedliche reaktive Systeme in einundderselben Vorrichtung direkt hintereinander verarbeitet werden können, da im Wesentlichen keine umfangreichen Reinigungsarbeiten notwendig sind, d.h. die Reinigungsarbeiten sich im Wesentlichen auf die Kavität (16, 24, 29, 43, 44) beschränken. Kleine und kleinste Serien von Bauteilen können auf diese Weise realisiert werden.

Sofern in der nachfolgenden Beschreibung im Zusammenhang mit dem erfindungsgemäßen Verfahren auch Vorrichtungsmerkmale aufgeführt werden, beziehen sich diese vorzugsweise auf die erfindungsgemäße Vorrichtung, die nachstehend noch näher definiert wird. Ebenso beziehen sich Verfahrensmerkmale, die ggf. im Zusammenhang mit der Vorrichtung genannt werden, vorzugsweise auf das erfindungsgemäße Verfahren.

Nachfolgend wird die Erfindung detaillierter beschrieben.

Unter "Edukt" wird jede Komponente verstanden, die nötig ist, um durch Reaktion ein Polymer zu bilden. Der hier verwendete Begriff "Edukt" betrifft erfindungsgemäß monomere oder oligomere Edukte, die insbesondere neben Monomeren und Oligomeren auch niedere Polymere sowie jeweils vorvernetzte Stufen von Monomeren, Oligomeren und niederen Polymeren umfassen. Im Folgenden wird der Einfachheit halber nur von "Edukt" gesprochen.

Das Polymer kann ggf. auch nur durch eine Komponente gebildet werden, die alle notwendigen Zusatzstoffe enthält, aber lediglich durch zu niedrige Temperaturen davon abgehalten wird, zu reagieren. Bei zwei Edukten kann die Mehrkomponentenmischung z.B. aus Monomer 1 und Monomer 2 bestehen, aus Monomer 1 und Katalysator und Monomer 1 und Aktivator, aus Monomer 1 und Katalysator und Monomer 2 und Aktivator sowie beliebigen Varianten davon.

Unter "Abformvorrichtung" wird im Sinne der vorliegenden Erfindung eine Vorrichtung verstanden, mit der ein Edukt in eine Kavität eingebracht und dort ausgehärtet werden kann. Die verwendete Abformvorrichtung (11, 21, 41) kann prinzipiell eine mehr oder weniger herkömmliche Vorrichtung, z. B. eine Spritzgussvorrichtung, sein, die für die vorliegende Erfindung angepasst wurde.

Die Kavität (16, 29, 44) der Abformvorrichtung (11, 21, 41) hat im Wesentlichen die Negativform des herzustellenden Bauteils, insbesondere genau die Negativform zuzüglich notwendiger Angüsse. Dabei kann die Kavität (16, 24, 43) mit einem Trennmittel beschichtet sein, welches das Entformen des Bauteils erleichtert.

In Schritt a) wird das Verstärkungsmaterial vorzugsweise in biegeschlaffer, halbsteifer oder steifer Form in der Abformvorrichtung (11, 21, 41) bereitgestellt.

Die Kavität (16, 24, 43) kann dabei durch ein Spritzgießwerkzeug, ein einfaches (Pressen-) Werkzeug, eine Halbschale mit Folienabdeckung oder eine doppelwandige Struktur (Textil oder Folie) gebildet werden. In einer speziellen Ausführungsform kann die Kavität (16, 24, 43) durch das Verstärkungsmaterial, insbesondere ein Verstärkungstextil, selbst ausgebildet werden.

Erfindungsgemäß wird das zumindest eine Edukt in Schritt b) in einem Behälter (100) bereitgestellt, der sowohl für die Lagerung und Bevorratung als auch für den Transport und für das Einbringen des zumindest einen Edukts in die Kavität (16, 24, 43) ausgelegt ist. Der erfindungsgemäße Behälter (100) ist vorteilhafterweise als geschlossener Behälter ausgeführt, der das zumindest eine Edukt während Lagerung, Bevorratung und Transport gegen äußere Einflüsse (z.B. Luft, Luftfeuchtigkeit, Lichteinstrahlung) schützt. Er ist dabei insbesondere in sich stabil ausgeführt, um das zumindest eine Edukt sicher aufzunehmen. Der erfindungsgemäße Behälter (100) stellt in Bezug auf die Abformvorrichtung (11, 21, 41) einen externen Behälter dar, der nicht Teil der Abformvorrichtung (11, 21, 41) ist. Er wird vor dem erfindungsgemäßen Verfahren befüllt und verschlossen, vorzugsweise direkt beim Produzenten des zumindest einen Edukts, und erst während des erfindungsgemäßen Verfahrens wieder geöffnet.

Der erfindungsgemäße Behälter (100) kann insbesondere ein Einwegbehälter sein. Er kann nach dem Entleeren entsorgt werden oder beispielsweise in Form einer Verstärkungsrippe (30) im fertigen Bauteil verbleiben. Handelt es sich bei dem Behälter (100) um eine größere Einheit, ist dieser vorzugsweise ein Mehrwegbehälter, ggf. ein Mehrwegbehälter mit Pfandsystem. Diese Ausführungsform hat den Vorteil, dass der Verarbeiter keine Behälter (100) reinigen muss, sondern das durch den Produzenten übernommen wird.

Ein wesentlicher Vorteil des erfindungsgemäßen Behälters (100) ist, dass das zumindest eine Edukt bereits direkt nach seiner Produktion gegen Umwelteinflüsse geschützt ist und dies bis zu dem Moment bleibt, in dem es in die Kavität (16, 24, 43) eingebracht wird. Schon produzentenseitig kann die richtige Dosierung des zumindest einen Edukts eingestellt werden. Eine Vortrocknung oder Vorbehandlung, wie z.B. eine Reinigung/Filtration, des zumindest einen Edukts vor dem Verarbeiten ist nicht nötig.

Der erfindungsgemäße Behälter (100) wird in Schritt c) in geeigneter Weise in die Abformvorrichtung (11, 21, 41) eingesetzt. Hierzu sind vorzugsweise passende Aufnahmen/Halterungen für den Behälter (100) sowie Anschlüsse für das zumindest eine Edukt vom den Behälter (100) in die Kavität (16, 24, 43) vorgesehen. Der erfindungsgemäße Behälter (100) bleibt während des Einsetzens in Schritt c) noch geschlossen und das zumindest eine Edukt damit weiter geschützt.

Das zumindest eine Edukt kann direkt in dem Behälter (100) unmittelbar vor dem Einbringen in die Kavität (16, 24, 43) in Schritt d) in seiner Viskosität eingestellt werden. Aufgrund der kurzen Entfernung zwischen Behälter (100) und Kavität (16, 24, 43) entstehen folglich kurze Verweilzeiten des zumindest einen Edukts, so dass beheizte Kessel und Leitungen wie im Stand der Technik erfindungsgemäß nicht mehr benötigt werden. Aufgrund der kurzen Wege des zumindest einen Edukts in die Kavität (16, 24, 43) kann dessen Temperatur sehr exakt eingehalten werden. Somit können reaktive Systeme mit schnelleren Reaktionszeiten eingesetzt werden, wodurch kürzere Zykluszeiten als im Stand der Technik möglich sind.

Das Einbringen des zumindest einen Edukts in Schritt d) erfolgt direkt aus dem Behälter (100) heraus in die Kavität (16, 24, 43), ohne dass das zumindest eine Edukt durch Leitungen oder Pumpen geführt wird. Erfindungsgemäß bevorzugt wird der geschlossene Behälter (100) erst zu Schritt d) geöffnet, um das zumindest eine Edukt in die Kavität (16, 24, 43) einzubringen.

Das erfindungsgemäß eingesetzte zumindest eine Edukt hat eine vergleichsweise geringe Viskosität von 1 mPa·s bis 1000 mPa·s. bevorzugt 3 mPa·s bis 500 mPa·s, insbesondere 5 mPa·s bis 200 mPa·s. Hierdurch ist es in herkömmlichen Spritzgussvorrichtungen nur schwer zu handhaben. Mit den Merkmalen der vorliegenden Erfindung ist die Handhabung jedoch problemlos möglich. Insbesondere durch die geringe Viskosität kann das zumindest eine Edukt das in der Kavität (16, 24, 43) bereitgestellte Verstärkungsmaterial im Wesentlichen vollständig durchdringen und so ein homogenes Bauteil gewährleisten.

Das zumindest eine Edukt kann Additive enthalten, beispielsweise ein Treibmittel, so dass nach dem Einbringen in die Kavität (16, 24, 43) eine Schaumstruktur entsteht, die zu einer zusätzlichen Gewichtsreduzierung des fertigen Bauteils führt.

Das Aushärten des zumindest einen Edukts in der Kavität (16, 24, 43) in Schritt e) erfolgt aufgrund der Reaktivität des Systems und kann durch eine geeignete Temperatur der Kavität (16, 24, 43) unterstützt und/oder beschleunigt werden.

Beim Entformen des fertigen Bauteils in Schritt f) wird neben dem Anguss auch der Behälter (100) aus der Vorrichtung entfernt, sofern er nicht, wie vorstehend erwähnt, als Funktionselement (30) im Bauteil verbleibt.

Mit der vorliegenden Erfindung wird der nach dem Stand der Technik notwendige Prozessschritt der Dosierung des/der Edukte/s und ggf. Additive aus dem eigentlichen Herstellungsprozess ausgelagert, vorzugsweise direkt zum Produzenten des zumindest einen Edukts. Zudem werden die Wege des zumindest einen Edukts innerhalb der Abformvorrichtung (11, 21, 41) deutlich verkürzt, da das zumindest eine Edukt direkt aus dem Behälter (100) heraus, durch eine Mischeinheit (3), in die Kavität (16, 24, 43) eingebracht wird. Hierdurch und optional durch eine Reihe nachstehend beschriebener weiterer Merkmale wird das Herstellungsverfahren für ein verstärktes Kunststoff-Bauteil erheblich vereinfacht.

So müssen nach dem erfindungsgemäßen Verfahren weder Vorratsbehälter und Dosierpumpen, noch Förderleitungen oder Mischköpfe wie in einer klassischen RIM-/RTM-Vorrichtung gereinigt werden. Sämtliche Rückstände werden zusammen mit dem Anguss und dem Behälter (100) entformt, bzw. entfernt, und können den nachfolgenden Herstellungszyklus nicht behindern oder kontaminieren.

Für den Verarbeiter des zumindest einen Edukts ist kein vertieftes Know-How bezüglich der Chemie der reaktiven Systeme notwendig und nicht ausschlaggebend für die Qualität des fertigen Bauteils und die Reproduzierbarkeit des Herstellungsverfahrens. Auch die Verarbeitungstechnik ist sehr einfach ausgelegt und erfordert aufgrund der abgestimmten Prozesstechnik nur geringe Kenntnisse vom Verarbeiter. Dies wird durch die vom Produzenten gelieferten Behälter mit Edukten und ggf. Additiven, bzw. die erfindungsgemäße Zusammenstellung zur Herstellung von verstärkten Kunststoff-Bauteilen, d.h. durch einen angepassten "Bausatz", sichergestellt.

Ein weiterer Vorteil des erfindungsgemäßen Verfahrens besteht darin, dass es eine besonders hohe Flexibilität mit sich bringt. Umstellungen im Material des fertigen Bauteils werden beispielsweise problemlos möglich. So können verschiedene reaktive Systeme mehr oder weniger direkt hintereinander verarbeitet werden, ohne sich gegenseitig zu stören. Selbst Farbwechsel sind von einem Bauteil zum nächsten Bauteil möglich. Eine wirtschaftliche Fertigung ist sogar bis hin zu Einzelstücken denkbar.

Das erfindungsgemäße Verfahren ist insbesondere für Einkomponentensysteme vorteilhaft, bei denen das Edukt oder die Edukte ggf. zusammen mit weiteren Additiven in einem Behälter (100) vorliegen und das Aushärten, also das Fertigstellen des gewünschten Bauteils, nur über die Temperatur gesteuert werden kann.

In einer Weiterbildung des Verfahrens werden in Schritt b) zumindest ein erstes Edukt in einem ersten Behälter (100a) und ein zweites Edukt in einem zweiten Behälter (100b) bereitgestellt. Das vorstehend für den Behälter (100) Ausgeführte gilt für den ersten Behälter (100a) und den zweiten Behälter (100b) entsprechend. Diese Weiterbildung ist für reaktive Systeme aus zwei oder mehr Edukten vorteilhaft, da diese voneinander getrennt jeweils in einem Behälter (100a, 100b) bevorratet, transportiert und in dem erfindungsgemäßen Verfahren eingesetzt werden können. Hierdurch ist es möglich, zwei unterschiedliche Edukte auf unterschiedliche Temperaturen vorzuheizen (z.B. zur Einstellung der Viskosität), oder in den beiden Behältern (100a, 100b) unterschiedliche Farben vorzusehen. In jedem Fall wird die Variabilität der Bestückung der Abformvorrichtung (11, 21, 41) erhöht.

Bei der Verwendung von zumindest zwei Edukten hat es sich für die Reaktion ferner als vorteilhaft erwiesen, wenn in Schritt c) und/oder vor Schritt d) zumindest das erste Edukt aus dem ersten Behälter (100a) oder einer ersten Kammer (1) des Behälters (100) und das zweite Edukt aus dem zweiten Behälter (100b) oder einer zweiten Kammer (2) des Behälters (100) in einer Mischeinheit (3) miteinander vermischt werden. Hierdurch wird einerseits sichergestellt, dass die Edukte bereits ausreichend vermischt in die Kavität (16, 24, 43) eingebracht werden, andererseits wird die Reaktionsgeschwindigkeit erhöht.

Die Vermischung der zumindest zwei Edukte kann unter Zuhilfenahme entsprechender Druckerzeuger nach dem Prall- oder Gegenstrom-Prinzip erfolgen. Während des Einbringens in die Kavität (16, 24, 43) können die zumindest zwei Edukte weiter vermischt werden. Die Durchmischung kann alternativ oder auch zusätzlich in einem Angusskanal (15) vor der Kavität (16, 24, 43) erfolgen bzw. dort verstärkt werden, beispielsweise durch einen statischen Mischer oder eine offenporige Struktur (Schaumstruktur). Die Oberfläche und/oder Form des Angusskanals (15) kann so strukturiert sein, dass eine turbulente Strömung entsteht und zu einer intensiveren Durchmischung der zumindest zwei Edukte beiträgt.

Das erfindungsgemäße Verfahren weist als einen Vorteil auf, dass die Flexibilität des Spritzgießens durch das Hinzufügen einer weiteren (reaktiven) Komponente im gleichen Werkzeug erhöht wird. Das erfindungsgemäße Verfahren lässt sich weiterhin auch für Pressprozesse (d.h. ohne Spritzguss) anwenden.

Ein Vorteil des erfindungsgemäßen Verfahrens besteht ferner darin, dass das/die Edukt/e vorportioniert für ein bestimmtes Bauteil oder eine Anzahl von Bauteilen bereitgestellt werden. Dies wird in einer bevorzugten Ausführungsform dadurch erreicht, dass das Volumen des zumindest einen Edukts, bzw. die Summe der Volumina des ersten Edukts und des zweiten Edukts im Wesentlichen dem freien Volumen der Kavität (16, 24, 43) der Abformvorrichtung (11, 21, 41) entspricht/entsprechen.

Die Formulierung "im Wesentlichen" ist in diesem Zusammenhang so zu verstehen, dass neben der tatsächlich für das Ausfüllen der Kavität (16, 24, 43) benötigten Menge 2 % bis 30 %, bevorzugt 5 % bis 20 %, insbesondere 10 % bis 15 % dieser benötigten Menge zusätzlich als Prozesssicherheit vorhanden sind. In der Praxis beinhaltet die für die Herstellung benötigte und bereitgestellte Menge i.d.R. bereits diesen Sicherheitszuschlag. Damit wird dem Verbrauch an Edukt/en für Angüsse, Gussgrate, Totmengen im Behälter etc. Rechnung getragen. Durch diese Ausführungsform ist es möglich, auch einzelne Bauteile herzustellen, ohne Material in unverhältnismäßig großen Mengen einzusetzen und den Rest als Abfall verwerfen zu müssen. Vorzugsweise wird die Mischeinheit (3), die Teil des Behälters (100) oder der Behälter (100a, 100b) sein kann, mit entfernt und entsorgt.

Abhängig von der Art der erfindungsgemäß eingesetzten reaktiven Systeme hat es sich als zweckmäßig erwiesen, wenn das Edukt vor Schritt c), in Schritt d) oder vor Schritt e) aktiviert wird, insbesondere thermisch, chemisch und/oder mechanisch. Dabei können auch verschiedene Maßnahmen zur Aktivierung kombiniert werden, beispielsweise das Vorsehen eines chemischen Aktivators zusammen mit einer Erwärmung des/der Edukte/s. Das Edukt wird (in der Regel einmalig) aktiviert.

So kann das Edukt vor dem Einsetzen des Behälters (100) in die Abformvorrichtung (11, 21, 41) (Schritt c)) in dem Behälters (100) aktiviert werden, beispielsweise thermisch durch Aufheizen des Behälters (100) in einem Ofen. Gleichzeitig mit dieser Aktivierung kann die Einstellung der Viskosität erfolgen.

Erfindungsgemäss wird das Edukt beim Einbringen in die Kavität (16, 24, 43) (Schritt d)) aktiviert, und zwar mechanisch durch einen statischen Mischer (d.h. Mischeinheit (3)) zwischen dem Behälter (100) und der Kavität (16, 24, 43). Werden zwei Edukte (ggf. mit Additiven) in die Kavität (16, 24, 43) eingebracht, kann deren Vermischung auch eine chemische Aktivierung bewirken.

Eine andere Möglichkeit der (thermischen) Aktivierung ist beispielsweise eine Temperierung der Kavität (16, 24, 43), nachdem das Edukt eingebracht wurde, so dass die Aktivierung vor dem Aushärten (Schritt e)) erfolgt.

Ferner können die zumindest zwei Edukte in ihrem jeweiligen Behälter (100a, 100b) auf unterschiedliche Temperaturen vorgewärmt werden, um sie zu aktivieren und/oder eine für den Verfahrensablauf gewünschte Viskosität einzustellen. Dieses Vorwärmen kann in einer anderen Weiterbildung auch außerhalb der eigentlichen Vorrichtung, beispielsweise in einem geeigneten Ofen vor dem Einsetzen der Behälter (100a, 100b) in die Vorrichtung vorgenommen werden.

Es kann ebenso vorteilhaft sein, wenn ein Aktivator und/oder ein Katalysator bereits in dem zumindest einen Edukt zusätzlich enthalten sind. Hierdurch werden bereits vor dem eigentlichen Herstellungsverfahren eine optimale Verteilung des Aktivators und/oder des Katalysators und damit eine optimaler Reaktionsverlauf sichergestellt. Dies ist insbesondere dann vorteilhaft, wenn das Edukt bei Umgebungstemperaturen gelagert und transportiert wird und die Aktivierung erst vor Ort, d.h. in der Vorrichtung (11, 21, 41), thermisch in einem Ofen unmittelbar neben der Vorrichtung (11, 21, 41) und/oder mechanisch ausgelöst wird.

In einer Ausführungsform des Verfahrens, in der zumindest zwei Edukte in getrennten Behältern (100a, 100b) eingesetzt werden, ist es u.a. für die Lager-Stabilität der Edukte vorteilhaft, wenn das erste Edukt in dem ersten Behälter (100a) zusätzlich einen Aktivator und/oder das zweite Edukt in dem zweiten Behälter (100b) zusätzlich einen Katalysator enthält. Werden die zumindest zwei Edukte wie vorstehend beschrieben miteinander vermischt, finden Aktivierung und/oder Katalyse unmittelbar statt.

Als Alternative dazu kann in einer anderen erfindungsgemäßen Ausführungsform dem zumindest einen Edukt in Schritt c) zumindest ein Aktivator und/oder zumindest ein Katalysator zugegeben werden. Diese Alternative kann insbesondere in der Chemie der Edukte, Aktivatoren und/oder Katalysatoren begründet liegen, beispielsweise weil das System bereits bei Raumtemperatur aktiviert wird und reagiert. So ist es beispielsweise möglich, das zumindest eine Edukt durch einen weiteren Behälter (100) in die Kavität (16, 24, 43) einzubringen, der einen Aktivator und/oder einen Katalysator enthält.

Abhängig von der Art des herzustellenden Bauteils und dessen Verwendung oder Anwendung wird das Verstärkungsmaterial aus der Gruppe bestehend aus Geweben, Gelegen, Rovings, Gewirken, Geflechten, Gestricken und Kombinationen davon ausgewählt. Das hat den Vorteil, dass die jeweiligen Fasern des Verstärkungsmaterials optimal in der Kavität (16, 24, 43) platziert werden können.

Das Einbringen des zumindest einen Edukts aus dem Behälter (100) in die Kavität (16, 24, 43) in Schritt d) kann vorteilhafterweise mittels eines Kolbens (4), mittels Unterdruck in der Kavität (16, 24, 43) oder mittels einer Quetschwalze erfolgen, der/die auf das zumindest eine Edukt in dem Behälter (100) wirkt. Über die Geschwindigkeit, mit welcher beispielsweise der Kolben (4) gefahren wird, kann so die Zeit des Durchdringens, sprich des Tränkens oder des Imprägnierens des Verstärkungsmaterials bestimmt werden. Alternativ kann über die Einstellung eines (variablen) Unterdrucks in der Kavität (16, 24, 43) die Durchdringungsgeschwindigkeit geändert und angepasst werden.

Ferner ist es möglich, den Behälter (100) zwischen zwei Platten oder Quetschwalzen definiert, d.h. mit einer vorgegebenen Geschwindigkeit, "auszupressen". Eine weitere Alternative ist die Beaufschlagung des Behälters (100) mit Druckluft.

Wichtig ist, dass genug Druck auf das zumindest eine in einem Behälter (100) bereitgestellte Edukt aufgebracht wird, um es möglichst vollständig in die Kavität (16, 24, 43) einzubringen. Hierzu können die Fließkanäle in dem jeweiligen Behälter (100) und/oder der Kavität (16, 24, 43) besonders ausgelegt sein.

Der erfindungsgemäße Behälter (100) zur Aufnahme des zumindest einen Edukts kann je nach Art und Menge des Edukts unterschiedlich ausgestaltet sein. Insbesondere wird er aus der Gruppe bestehend aus Schlauchbeutel, Doppelkammerbeutel, Kartusche, Kapsel, Fass, Becher, Patrone, Dose, Pad und Kombinationen davon ausgewählt. Erfindungsgemäß sind als Behälter (100) oder Behälter (100a, 100b) Schlauchbeutel, Doppelkammerbeutel, Kartuschen oder Kapseln bevorzugt.

In einer besonders bevorzugten Ausführungsform des erfindungsgemäßen Verfahrens umfasst das in Schritt b) bereitgestellte zumindest eine Edukt Caprolactam. Insbesondere können zwei Komponenten vorgelegt werden, einmal Caprolactam mit einem Aktivator und einmal Caprolactam mit einem Katalysator.

Das erfindungsgemäße Verfahren eignet sich insbesondere für die Herstellung endlosfaserverstärkter Bauteile mit Polyamidmatrix. Die gegenüber Epoxid- und Polyurethanharzen niedrige Viskosität der Caprolactam-basierten Reaktionssysteme (ca. 5 mPa·s) begünstigt die Infiltrierung der Verstärkungstextilien. Somit lässt sich die Infiltrierung von insbesondere großflächigen und dünnwandigen Bauteilen effizienter, d.h. mit verhältnismäßig geringen Fülldrücken und mit kürzeren Zykluszeiten realisieren. Das durch die Caprolactam-Polymerisation entstehende Polyamid kann als Thermoplast im erwärmten Zustand umgeformt und somit auch insbesondere in mehrstufigen Prozessen weiterverarbeitet werden. Durch die Kombination des erfindungsgemäßen Verfahrens mit dem klassischen Spritzguss lassen sich einzelne Bauteilelemente bedarfsgerecht mit unterschiedlichen Füll- und Verstärkungsstoffen, jedoch gleicher oder artverwandter Matrix herstellen, was sich wiederrum positiv auf die Kompatibilität zwischen den Funktions- und Trägerelementen auswirkt. So kann z.B. eine gute Haftung zwischen kurzglasfaserverstärkten Rippen und dem endlosfaser-verstärkten Laminat erzeugt und das Bauteil als ganzes regranuliert bzw. recycelt werden.

Die vorstehenden Ausführungen und Bevorzugungen im Hinblick auf das erfindungsgemäße Verfahren gelten für die nachstehend beschriebene erfindungsgemäße Vorrichtung entsprechend. Ebenso gelten die nachstehenden Ausführungen und Bevorzugungen im Hinblick auf die erfindungsgemäße Vorrichtung für das erfindungsgemäße Verfahren entsprechend.

Wie vorstehend bereits angedeutet, hat die Kavität (16, 24, 43) der Abformvorrichtung (11, 21, 41) im Wesentlichen die Negativform des herzustellenden Bauteils.

Die erfindungsgemäße Aufnahmevorrichtung ist für die Aufnahme, die genaue Positionierung und die Fixierung von zumindest einem Behälter (100) ausgelegt. Die Aufnahmevorrichtung weist ein freies Volumen für die Aufnahme des zumindest einen Behälters (100) und einen formschlüssigen oder kraftschlüssigen Mechanismus für die Fixierung des zumindest einen Behälters (100) auf. Der Mechanismus kann passiv oder aktiv durch die Anlagensteuerung getriggert den zumindest einen Behälter (100) fixieren oder nach der Ausbringung des zumindest einen Edukts freigeben.

Die Aufnahmevorrichtung kann in einer Weiterbildung der Erfindung zusammen mit der Ausbringvorrichtung (4) eine Baugruppe bilden.

In dem erfindungsgemäßen Behälter (100) wird ein Edukt sowohl gelagert und bevorratet als auch transportiert und aus diesem heraus direkt in die Kavität (16, 24, 43) eingebracht. Damit ist das Edukt von seiner Produktion bis zur endgültigen Verarbeitung gegen Umwelteinflüsse geschützt.

Die Ausbringeinrichtung (4) kann unterschiedlich gestaltet sein und umfasst vorteilhafterweise einen Kolben (4), der auf den Behälter (100) und das darin vorhandene zumindest eine Edukt wirkt. Dabei ist die Geschwindigkeit, mit welcher der Kolben (4) gefahren wird, in weiten Grenzen einstellbar. Ferner ist es möglich, den Behälter (100) zwischen zwei Platten oder mittels einer Quetschwalze definiert "auszupressen". Ebenso kann die Ausbringeinrichtung (4) in einer Vorrichtung bestehen, die einen Unterdruck in der Kavität (16, 24, 43) aufbaut und damit auf das Edukt wirkt. Die Ausbringeinrichtung (4) kann dabei als separate Einrichtung (z.B. für Unterdruck, Quetschwalze) oder als Teil des Behälters (100) (z.B. Kolben (4)) ausgeführt werden.

Die erfindungsgemäße Mischeinheit (3) stellt die intensive Durchmischung des zumindest einen Edukts sicher, insbesondere in Fällen, in denen dem zumindest einen Edukt ein Additiv beigemischt ist, oder in Fällen, in denen zwei oder mehr Edukte verarbeitet werden. Die Mischeinheit (3) kann auch als Einweg-Mischeinheit ausgeführt sein, die nach Gebrauch entsorgt wird.

Mit der Vorrichtung der vorliegenden Erfindung werden nach dem Stand der Technik notwendige Wege des zumindest einen Edukts innerhalb der Abformvorrichtung (11, 21, 41) deutlich verkürzt. Hierdurch und optional durch eine Reihe nachstehend beschriebener weiterer Merkmale wird die Vorrichtung zur Herstellung eines verstärkten Kunststoff-Bauteils erheblich vereinfacht. Notwendige Investitionen sinken und machen die erfindungsgemäße Vorrichtung für einen breiteren Kreis von Anwendern interessant und wirtschaftlich.

Insbesondere sind keine Vorratsbehälter und Dosierpumpen oder Förderleitungen und Mischköpfe wie in einer klassischen RIM-/RTM-Vorrichtung vorhanden, die nach dem Einsatz gereinigt werden müssten.

Ein weiterer Vorteil der erfindungsgemäßen Vorrichtung ist ihre hohe Flexibilität, die Umstellungen im Material des fertigen Bauteils beispielsweise problemlos ermöglicht. Durch die Verlagerung der notwendigen Einrichtungen in den Behälter (100) bzw. direkt vor die Kavität (16, 24, 43) kann die Erfindung auch auf eine herkömmliche Vorrichtung, z. B. eine Spritzgussvorrichtung, angewendet werden.

In einer besonderen Ausführungsform kann die Abformvorrichtung als Drehteller-Werkzeug (41) oder Würfel-Werkzeug (21), wie sie von Spritzgussverfahren bekannt sind, ausgeführt sein. Dieses Werkzeug (21, 41) wird auf einer konventionellen Spritzgussvorrichtung mit Kernzugeinrichtungen eingesetzt. Die Kernzüge dienen der Beaufschlagung des zumindest einen Behälters (100) mit Druck und somit dem Einbringen des zumindest einen Edukts in die Kavität (16, 24, 43). Anschließend wird das Drehteller-Werkzeug (41) oder Würfel-Werkzeug (21) gedreht und das Bauteil mit einem Standard-Thermoplasten hinterspritzt. Dadurch können Rippen, Versteifungen und weitere Funktionselemente (30) für Befestigungen, etc. angespritzt werden. Auf einer konventionellen Spritzgussvorrichtung mit entsprechender Steuerung für Drehteller-Werkzeuge (41) oder Würfel-Werkzeuge (21) kann somit ein Bauteil hergestellt werden, dass aus zwei unterschiedlichen (polymeren) Materialien gefertigt ist. Das Material zum Hinterspritzen kann beispielsweise auch zähmodifiziert sein.

Die eine Seite des Werkzeuges (21, 41) kann die hohen Temperaturen für den RIM-Aushärteprozess mitbringen, die andere Seite die niedrigeren für das Hinterspritzen mit einem klassischen thermoplastischen Werkstoff. Es kann also das meist flächige RIM-Bauteil auf sehr einfache Weise funktionalisiert werden.

In einer Weiterbildung der erfindungsgemäßen Vorrichtung weist die Aufnahmevorrichtung zumindest eine Einrichtung zum Aktivieren des zumindest einen Edukts in dem zumindest einen Behälter (100) auf. Diese Einrichtung kann beispielsweise eine Heizeinrichtung, eine Belichtungseinrichtung sein.

Es hat sich für die schnelle und sichere Handhabung der erfindungsgemäßen Vorrichtung als vorteilhaft erwiesen, dass die Mischeinheit (3) in den zumindest einen Behälter (100) integriert ist. Hierdurch wird zunächst ein Mischkopf eingespart, der aufwändig gereinigt werden müsste. Sinnvoll ist diese Ausführungsform insbesondere bei Behältern (100) mit zwei und mehr Kammern (1, 2), in denen zwei oder mehr Edukte vorliegen.

Eine weitere erfindungsgemäße Variante sieht vor, dass beispielsweise zwei Edukte aus ihrem jeweiligen Behälter (100) in der Mischeinheit (3) eines der beiden Behälter zusammengeführt werden. So kann in einem der beiden Behälter (100) die Mischeinheit (3) auch entfallen.

In einer Weiterbildung kann die erfindungsgemäße Vorrichtung zumindest eine erste Kavität (24, 43) und eine zweite Kavität (29, 44) der Abformvorrichtung (21, 41) umfassen, wobei die zumindest eine erste Kavität (29, 44) ein von der zumindest einen zweiten Kavitäten (24, 43) unterschiedliches Volumen aufweist. Insbesondere ist das Volumen der zumindest einen zweiten Kavität (24, 43) größer. Diese Weiterbildung ermöglicht das Anformen von Funktionselementen durch einen Spritzgießprozess.

Weitere Ziele, Merkmale, Vorteile und Anwendungsmöglichkeiten ergeben sich aus der nachfolgenden Beschreibung von Ausführungsbeispielen der vorliegenden Erfindung anhand der Figuren. Es zeigen:
- Figur 1: eine schematische Darstellung eines Behälters 100 nach einer Ausführungsform der Erfindung,
- Figur 2a: eine schematische Darstellung eines Teils einer Abformvorrichtung 11 nach einer Ausführungsform der Erfindung mit einem Behälter 100,
- Figur 2b: eine schematische Darstellung eines Teils einer Abformvorrichtung 11 nach einer Ausführungsform der Erfindung mit zwei Behältern 100a, 100b,
- Figur 3: eine schematische Darstellung eines Teils einer Abformvorrichtung 11 nach einer Ausführungsform der Erfindung,
- Figur 4: eine schematische Darstellung eines Teils einer Abformvorrichtung 21 nach einer Ausführungsform der Erfindung, die als Würfel-Werkzeug 21 ausgebildet ist,
- Figur 5: eine schematische Darstellung eines Teils einer Abformvorrichtung 41 nach einer Ausführungsform der Erfindung, die als Drehteller-Werkzeug 41 ausgebildet ist, und
- Figur 6: eine schematische Darstellung eines Behälters 100 nach einer anderen Ausführungsform der Erfindung.

Die Figuren beschreiben besondere Ausführungsformen der Erfindung, die darauf nicht beschränkt ist. Andere Ausführungsformen z. B. mit mehreren Behältern 100 sind denkbar und nicht ausgeschlossen.

Wenn nachfolgend von "Komponenten" die Rede ist, so betrifft dieser Ausdruck sowohl einzelne (reine) Edukte als auch Edukte mit Additiven wie Aktivatoren, Katalysatoren etc.. Im Rahmen der vorliegenden Erfindung wird in einer Kammer eines Behälters 100 immer nur eine Komponente bereitgestellt.

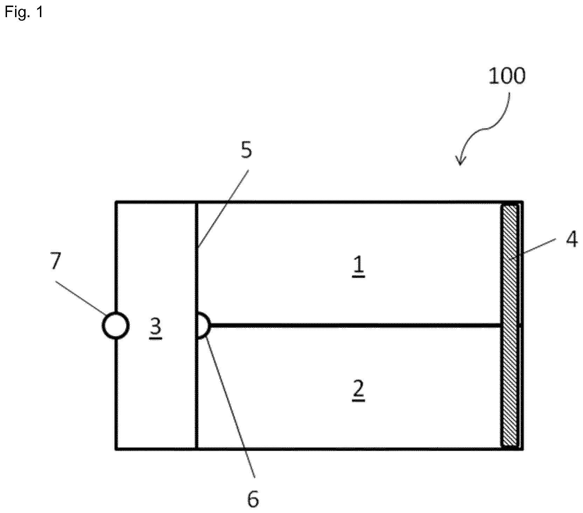

Figur 1 zeigt einen geschlossenen Behälter 100 mit insgesamt drei Kammern 1, 2, 3. Zwei Komponenten A und B liegen getrennt in den Kammern 1 und 2 vor. Durch Durchstoßen der Trennwand 5 an einer Sollbruchstelle 6 unter Aufbringung eines Drucks, beispielsweise mit Hilfe des Kolbens 4 können die beiden Edukte in die als Mischeinheit ausgestaltete Kammer 3 gelangen und dort miteinander vermischt werden. Bei weiterer Erhöhung des Drucks öffnet das Ventil 7 und die gemischten Komponenten A und B gelangen in eine (hier nicht dargestellte) Kavität einer Abformvorrichtung.

Die als Mischeinheit ausgestaltete Kammer 3 kann einen Schaumstoff aufweisen, durch den die Komponenten A und B geführt und dabei gemischt werden. Ebenso kann die Kammer 3 einen statischen Mischer aufweisen. Die Sollbruchstelle 6 kann in einer Weiterbildung der Erfindung als Mischdüse ausgestaltet sein.

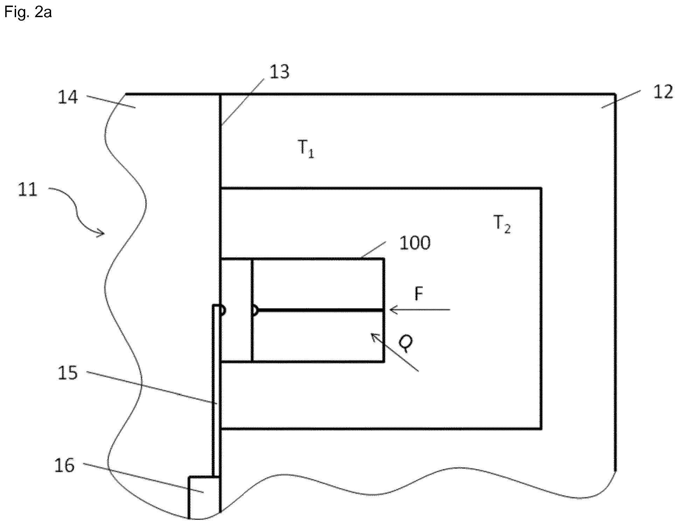

Figur 2a zeigt den Behälter 100 in einer erfindungsgemäßen Vorrichtung 11, die nachfolgend auch als "Werkzeug" bezeichnet wird. Der Behälter 100 befindet sich in einer ersten Werkzeughälfte 12 mit Zugang zu einer Trennebene 13. In einer zweiten Werkzeughälfte 14 befindet sich ein Angusskanal 15, der den Behälter 100 mit der Kavität 16 verbindet. Die erste Werkzeughälfte 12 wird in der vorliegenden Ausführungsform beheizt, ggf. nur im Bereich rund um den Behälter, was durch die beiden Temperaturen T₁ und T₂ angedeutet wird. Durch diese heiße Werkzeughälfte 12 kann der Behälter 100 auf eine Temperatur oberhalb der Reaktionstemperatur der Komponenten A und B erwärmt werden. Durch Aufbringen einer Kraft F z. B. auf einen (hier nicht dargestellten) Kolben 4 in dem Behälter 100 wird der Druck in dem Behälter 100 aufgebaut, der die Sollbruchstelle 6 zum Versagen bringt und die Durchmischung der Komponenten A und B startet.

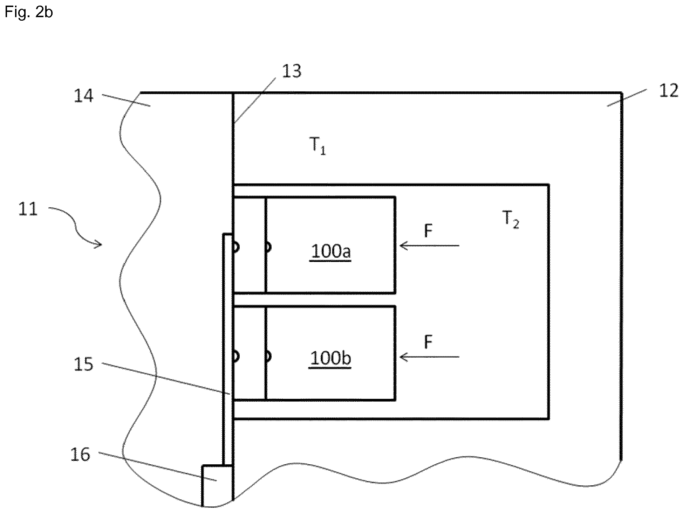

Figur 2b zeigt eine Abwandlung der in Figur 2a gezeigten Ausführungsform, in der anstelle eines Behälters 100 mit zwei Kammern 1, 2 zwei getrennte Behälter 100a, 100b mit jeweils einer Kammer vorgesehen sind.

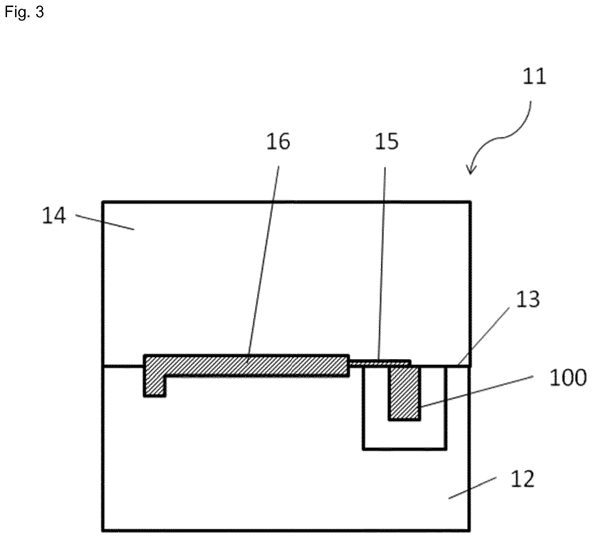

Figur 3 zeigt schematisch ein Werkzeug 11 mit den beiden Werkzeughälften 12 und 14, die durch die Trennebene 13 getrennt sind. Neben dem Behälter 100 in der ersten Werkzeughälfte 12 sind der Angusskanal 15 und die Kavität 16 für das Bauteil dargestellt. Nach dem Injizieren der Komponenten A und B, deren Durchmischung, der Füllung der Kavität 16, in der zuvor ein (hier nicht dargestelltes) Verstärkungsmaterial bereitgestellt wurde, und der Aushärtung kann das Bauteil samt Anguss und Behälter 100 einfach entformt werden.

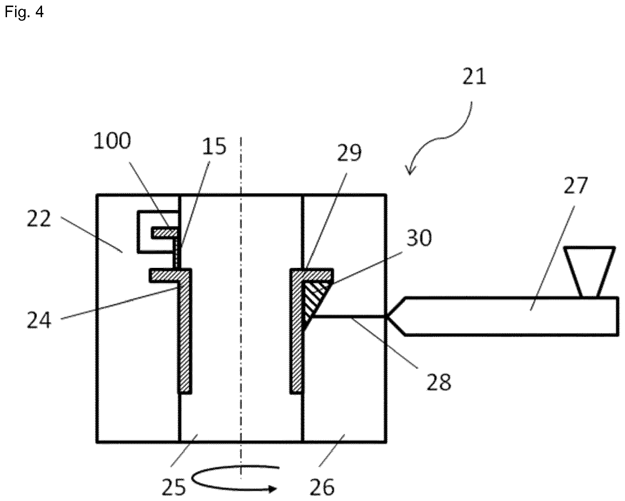

Figur 4 zeigt eine besondere Ausführungsform mit einem Würfel-Werkzeug 21. In diesem kann nach einem ersten Verfahrensschritt, bei dem aus zumindest einem Edukt als reaktives System und zumindest einem Verstärkungsmaterial ein flächiges Bauteil erzeugt wird, in einem zweiten Verfahrensschritt durch Spritzgießen eine Funktionalisierung über Rippen und Befestigungselemente erfolgen. Das Werkzeug 21 besteht aus drei Teilen: einer beweglichen, nicht drehbaren Seite 22 mit der Aufnahme für den Behälter 100 und einem Angusskanal 15 zwischen Behälter 100 und Kavität 24 zur Aufnahme des Verstärkungsmaterials, einem beweglichen Teil 25, das um die vertikale Achse gedreht werden kann, und einem festen Teil 26, das auf der Spritzseite der Spritzgussmaschine montiert ist. Das Werkzeug 21 bildet zwei Kavitäten 24, 29 aus, die sich durch ihr Volumen unterscheiden. Die Kavität 24 besitzt eine flächige Ausdehnung ohne Funktionselemente. Die Kavität 29 besitzt dagegen in dem festen Werkzeugteil 26 Aussparungen für Rippen 30 oder ähnliche Funktionselemente.

Die Einspritzeinheit 27 ist schematisch dargestellt. Sie hat über einen weiteren Angusskanal 28 Verbindung zu der Kavität 29 mit den Aussparungen für die Funktionselemente. Über diesen Angusskanal 28 können zusätzliche Rippen 30 oder andere Funktionselemente auf das nicht dargestellte flächige Bauteil gespritzt werden, welches durch Mitnahme auf dem beweglichen Teil 25 aus der Kavität 24 in die größere Kavität 29 umgesetzt wurde.

Das Würfel-Werkzeug 21 bietet den Vorteil, dass bis zu vier Positionen für die Bestückung, das Abformen und das Entnehmen vorgesehen werden können, so dass die Taktzeiten deutlich verringert werden können. Eine Bestückstation und eine Entnahmestation sind aus Gründen der Vereinfachung in Figur 4 nicht dargestellt. Dabei können die Seite 22, der bewegliche Teil 25 und das Teil 26 auf unterschiedlichen Temperaturen gehalten werden, wobei die Temperatur der Seite 22 höher ist als die des Teils 26, beispielsweise zur Aktivierung des/der Edukte/s.

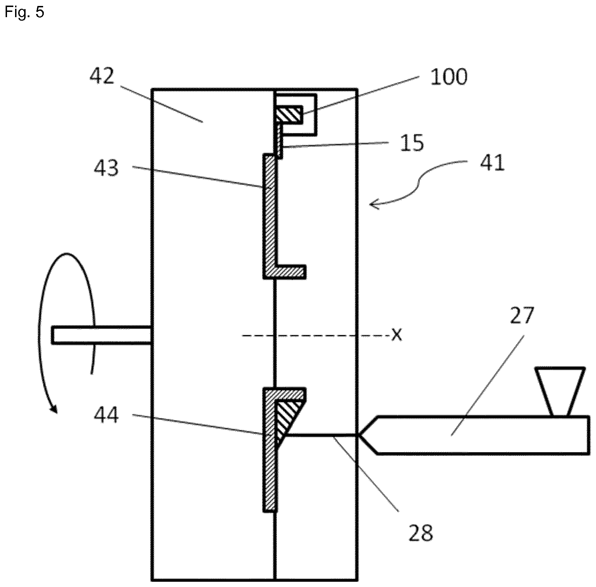

Figur 5 zeigt eine besondere Ausführungsform mit einem Drehteller-Werkzeug 41. Die Funktionsweise ist ähnlich wie die in Bezug auf Figur 4 erläuterte Variante. Im Fall der in Figur 5 dargestellten Variante wird die Werkzeughälfte 42 des Werkzeugs 41 um die horizontale Achse gedreht. Es entstehen zwei Kavitäten 43, 44. In Kavität 43 läuft der erste Verfahrensschritt ab, die Herstellung eines flächigen Bauteils aus zumindest einem Edukt und zumindest einem Verstärkungsmaterial. Wie im vorstehend beschriebenen Fall sind in der Kavität 44 zusätzliche Aussparungen für Rippen 30 oder andere Funktionselemente vorhanden. Die Kavität 44 ist über einen Angusskanal 28 mit dem Spritzaggregat 27 der Spritzgussmaschine verbunden. Durch den zweiten Verfahrensschritt, einen Spritzgießprozess, können die Funktionselemente angeformt werden. Im oberen Teil des Werkzeugs 41 befindet sich der Behälter 100 mit den reaktiven Komponenten A und B. Entlang der mit X markierten Linie kann ggf. eine thermische Trennebene für den feststehenden Teil des Drehteller-Werkzeug 41 vorgesehen werden, um auch hier unterschiedliche Temperaturen realisieren zu können.

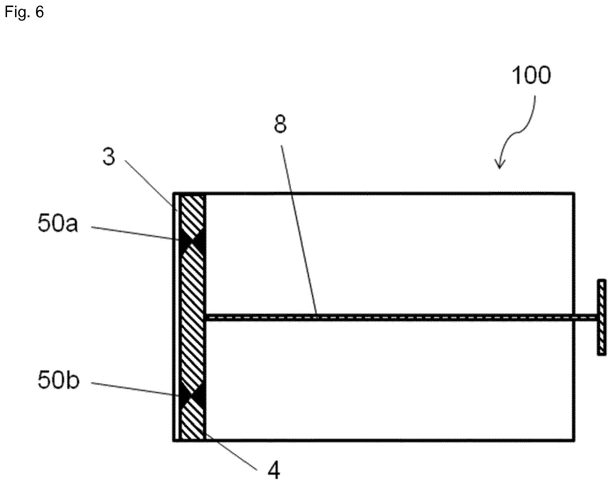

Figur 6 zeigt eine weitere Ausführungsform eines Behälters 100, bei welcher der Kolben 4 so angeordnet ist, dass die Mischeinheit 3 zunächst kein Volumen hat. Durch Ziehen der Kolbenstange 8 des Kolbens 4 können die beiden Komponenten A und B durch Öffnungen 50a, 50b in dem Kolben 4 in die Mischeinheit 3 gelangen. Nach vollständiger Durchmischung wird der Kolben 4 wiederum nach links bewegt, wobei die Öffnungen 50a, 50b wiederum geschlossen werden (einseitiges Prinzip), und die beiden gemischten Komponenten A und B nun in eine Kavität gedrückt werden.

Jeder erfindungsgemäße Behälter 100 ist so ausgelegt, dass abhängig von dem herzustellenden Bauteil die darin aufgenommene reaktive Komponente, ggf. zusammen mit einer oder mehreren weiteren reaktiven Komponenten bereits in der notwendigen Menge dosiert vorliegen, so dass die Füllung genau für ein Bauteil oder ein ganzzahliges Vielfaches eines Bauteils ausreicht.

Der Behälter 100 selbst kann aus unterschiedlichen Materialien gefertigt sein. Wichtig ist, dass sich das Material des Behälters 100 gegenüber dem/den Edukt/en inert verhält und diese/s gegen Umwelteinflüsse schützt. Bevorzugte Materialien sind Polyamid oder Metalle.

Mit dem erfindungsgemäßen Verfahren und der erfindungsgemäßen Vorrichtung ist es möglich, als verstärktes Kunststoff-Bauteil eine Vielzahl von Produkten des täglichen Bedarfs, aber auch für Spezialanwendungen und insbesondere kleine Stückzahlen bis hin zu Einzelstücken herzustellen. Beispiele liegen in der Medizintechnik, speziell der Prothetik, und im Sportbereich, zum Beispiel für körperangepasste Schienen, Schutzelemente oder Schuheinlagen.

Das gegenüber dem Stand der Technik deutlich vereinfachte Herstellungsverfahren ermöglicht u.a. den Einsatz der Erfindung für thermoplastische oder duroplastische Faserverbundbauteile auf einer Presse.

Die Verarbeitung von reaktiven Systemen und der Ablauf des Verfahrens orientieren sich dabei an den heute üblichen Standardprozessen (vgl. bspw. Wolfgang Kaiser, Kunststoffchemie für Ingenieure 10/2011, S. 190, ISBN: 978-3-446-43047-1). Die Herstellung von Bauteilen mit Hilfe von reaktiven Systemen beruht dabei auf chemischen und physikalischen Prozessen. Durch die Kombination beider lässt sich ein "Bauteil nach Maß" realisieren.

RIM-Bauteile werden in der Regel durch Vermischen flüssiger Komponenten in Gegenwart verschiedener Zusatzstoffe (insbesondere Katalysatoren und Aktivatoren) hergestellt. Dabei bestimmen vor allem die Art und Funktionalität der Komponenten, das Mischungsverhalten der Komponenten sowie die Kombination der gewählten Zusatzstoffe das Eigenschaftsbild.

In einem konkreten Beispiel wurden die Komponenten Caprolactam mit N,N'-Hexan-1,6-diylbis(hexahydro-2-oxo-1H-azepin-1-carboxamid) (Bruggolen® C 20) als Aktivator in der ersten Kammer 1 des Behälters 100 und Caprolactam mit Natriumcaprolactamat (Bruggolen® C 10) als Katalysator in der zweiten Kammer 2 des Behälters 100 bereitgestellt, erwärmt, mit einem Kolben 4 und einer Mischeinheit 3 durchmischt und anschließend mit dieser Mischung ein Verstärkungsgewebe in einer Kavität getränkt. Nach Entnahme des Bauteils und Entnahme des Behälters 100 konnte ein Produktwechsel vorgenommen werden, der lediglich ein neuer Behälter 100 mit Komponenten mit anderer Wärmestabilisierung und Farbe erforderte. Nach Einsetzen des Behälters 100 konnte anschließend ein erneuter Tränkprozess gestartet werden.

In einem Vergleichsversuch mit einem herkömmlichen Verfahren ist ein Spülen der gesamten Anlage inkl. der Vorratsbehälter, der Schläuche und des Mischkopfes erforderlich. Dazu werden im Laborbetrieb die erwähnten Anlagenkomponenten mit Druckluft gereinigt und anschließend die Zuleitungen mit je 5 kg reinem Caprolactam gespült. Dabei wird die Dauer des Reinigungsprozesses von 1 h von der Aufschmelzzeit des Reinigungs-Caprolactam dominiert.

## Patentansprüche

1. Verfahren zur Herstellung von verstärkten Kunststoff-Bauteilen, umfassend die Schritte:
a) Bereitstellen von zumindest einem Verstärkungsmaterial in zumindest einer Kavität (16, 24, 43) einer Abformvorrichtung (11, 21, 41),
b) Bereitstellen von zumindest einem Edukt in einem Behälter (100), wobei in dem Behälter (100) das zumindest eine Edukt sowohl gelagert und bevorratet als auch transportiert wird,
c) Einsetzen des Behälters (100) in die Abformvorrichtung (11, 21, 41),
d) Einbringen des zumindest einen Edukts aus dem Behälter (100) direkt in die Kavität (16, 24, 43), wobei das zumindest eine Edukt eine Mischeinheit (3) durchläuft, die Teil des Behälters (100) ist, wobei das zumindest eine Verstärkungsmaterial von dem zumindest einen Edukt zumindest teilweise durchdrungen wird,
e) Aushärten des zumindest einen Edukts mit dem zumindest einen Verstärkungsmaterial zu einem verstärkten Kunststoff-Bauteil und
f) Entformen des verstärkten Kunststoff-Bauteils.

2. Verfahren nach Anspruch 1, wobei in Schritt b) zumindest ein erstes Edukt in einem ersten Behälter (100a) und ein zweites Edukt in einem zweiten Behälter (100b) bereitgestellt werden.

3. Verfahren nach Anspruch 2, wobei vor Schritt d) zumindest das erste Edukt aus dem ersten Behälter (100a) oder einer ersten Kammer (1) des Behälters (100) und das zweite Edukt aus dem zweiten Behälter (100b) oder einer zweiten Kammer (2) des Behälters (100) in einer Mischeinheit (3) miteinander vermischt werden.

4. Verfahren nach einem der Ansprüche 1 bis 3, wobei das Volumen des zumindest einen Edukts im Wesentlichen dem freien Volumen der Kavität (16, 24, 43) der Abformvorrichtung (11, 21, 41) entspricht.

5. Verfahren nach einem der Ansprüche 1 bis 4, wobei das Edukt vor Schritt c), in Schritt d) oder vor Schritt e) aktiviert wird, insbesondere thermisch, chemisch und/oder mechanisch.

6. Verfahren nach einem der Ansprüche 1 bis 5, wobei das zumindest eine Edukt zusätzlich einen Aktivator und/oder einen Katalysator enthält.

7. Verfahren nach einem der Ansprüche 2 bis 6, wobei das erste Edukt in dem ersten Behälter (100a) zusätzlich einen Aktivator und/oder das zweite Edukt in dem zweiten Behälter (100b) zusätzlich einen Katalysator enthält.

8. Verfahren nach einem der Ansprüche 1 bis 5, wobei in Schritt c) dem zumindest einen Edukt zumindest ein Aktivator und/oder zumindest ein Katalysator zugegeben wird.

9. Verfahren nach einem der Ansprüche 1 bis 8, wobei das Einbringen in Schritt d) mittels eines Kolbens (4), mittels Unterdruck in der Kavität (16) oder mittels einer Quetschwalze erfolgt, der auf das zumindest eine Edukt in dem Behälter (100) wirkt.

10. Verfahren nach einem der Ansprüche 1 bis 9, wobei der oder die Behälter (100) aus der Gruppe bestehend aus Schlauchbeutel, Doppelkammerbeutel, Kartusche, Kapsel, Fass, Becher, Zylinder, Dose, Pad und Kombinationen davon ausgewählt ist/sind.

11. Verfahren nach einem der Ansprüche 1 bis 9, wobei das in Schritt b) bereitgestellte zumindest eine Edukt Caprolactam umfasst.

12. Vorrichtung zur Herstellung von verstärkten Kunststoff-Bauteilen, umfassend
- zumindest eine Kavität (16, 24, 43) einer Abformvorrichtung (11, 21, 41) zur Aufnahme eines Verstärkungsmaterials,
- eine Aufnahmevorrichtung für zumindest einen Behälter (100) für zumindest ein Edukt, wobei der Behälter (100) sowohl für die Lagerung und Bevorratung als auch für den Transport und für das Einbringen des zumindest einen Edukts in die Kavität (16, 24, 43) ausgelegt ist,
- eine Ausbringvorrichtung zum Ausbringen des zumindest einen Edukts aus dem Behälter (100) heraus direkt in die Kavität (16, 24, 43) und
- eine Mischeinheit (3), die Teil des Behälters (100) ist, für das zumindest eine Edukt, die zwischen der Aufnahmevorrichtung und der Kavität (16, 24, 43) angeordnet ist.

13. Vorrichtung nach Anspruch 12, wobei die Aufnahmevorrichtung zumindest eine Einrichtung zum Aktivieren des zumindest einen Edukts in dem zumindest einen Behälter aufweist.

14. Vorrichtung nach Anspruch 12 oder 13, umfassend zumindest eine erste Kavität (24, 43) und eine zweite Kavität (29, 44) der Abformvorrichtung (21, 41), wobei die zumindest eine erste Kavität (29, 44) ein von der zumindest einen zweiten Kavitäten (24, 43) unterschiedliches Volumen aufweist.

## Claims

1. A process for the production of reinforced plastics components, comprising the following steps:
a) provision of at least one reinforcing material in at least one cavity (16, 24, 43) of a molding device (11, 21, 41),
b) provision of at least one starting material in a container (100), where the at least one starting material is both stored and transported in the container (100),
c) insertion of the container (100) into the molding device (11, 21, 41),
d) introduction of the at least one starting material from the container (100) directly into the cavity (16, 24, 43), where the at least one starting material passes through a mixing unit (3) which is part of the container (100), where the at least one starting material penetrates at least to some extent through the at least one reinforcing material,
e) hardening of the at least one starting material with the at least one reinforcing material to give a reinforced plastics component, and
f) demolding of the reinforced plastics component.

2. The process according to claim 1, where, in step b), at least one first starting material is provided in a first container (100a) and one second starting material is provided in a second container (100b).

3. The process according to claim 2, where, before step d), at least the first starting material from the first container (100a), or from a first chamber (1) of the container (100), and the second starting material from the second container (100b), or from a second chamber (2) of the container (100), are mixed with one another in a mixing unit (3).

4. The process according to any of claims 1 to 3, where the volume of the at least one starting material in essence corresponds to the unoccupied volume of the cavity (16, 24, 43) of the molding device (11, 21, 41).

5. The process according to any of claims 1 to 4, where, before step c), in step d), or before step e), the starting material is activated, in particular thermally, chemically, and/or mechanically.

6. The process according to any of claims 1 to 5, where the at least one starting material additionally comprises an activator and/or a catalyst.

7. The process according to any of claims 2 to 6, where the first starting material in the first container (100a) additionally comprises an activator, and/or the second starting material in the second container (100b) additionally comprises a catalyst.

8. The process according to any of claims 1 to 5, where, in step c), at least one activator and/or at least one catalyst is added to the at least one starting material.

9. The process according to any of claims 1 to 8, where the introduction in step d) is achieved by means of a piston (4), by means of reduced pressure in the cavity (16), or by means of a squeeze roll which acts on the at least one starting material in the container (100).

10. The process according to any of claims 1 to 9, where the container(s) (100) is/are selected from the group consisting of tubular bag, double-chamber bag, cartridge, capsule, drum, beaker, cylinder, vessel, pad and combinations thereof.

11. The process according to any of claims 1 to 9, where the at least one starting material provided in step b) comprises caprolactam.

12. A device for the production of reinforced plastics components, comprising
- at least one cavity (16, 24, 43) of a molding device (11, 21, 41) to receive a reinforcing material,
- a reception device to receive at least one container (100) for at least one starting material, where the container (100) is designed not only for storage but also for transport and introduction of the at least one starting material into the cavity (16, 24, 43),
- a delivery device for the delivery of the at least one starting material from the container (100) directly into the cavity (16, 24, 43), and
- for the at least one starting material, a mixing unit (3), which is part of the container (100), arranged between the reception device and the cavity (16, 24, 43).

13. The device according to claim 12, where the reception device comprises at least one device for the activation of the at least one starting material in the at least one container.

14. The device according to claim 12 or 13, comprising at least one first cavity (24, 43) and one second cavity (29, 44) of the molding device (21, 41), where the volume of the at least one first cavity (29, 44) differs from that of the at least one second cavity (24, 43).

## Revendications

1. Procédé pour la fabrication de composants en matière plastique renforcés, comprenant les étapes suivantes :
a) la mise à disposition d'au moins un matériau de renforcement dans au moins une cavité (16, 24, 43) d'un dispositif de façonnage (11, 21, 41),
b) la mise à disposition d'au moins un réactif dans un contenant (100), l'au moins un réactif étant aussi bien entreposé et stocké que transporté dans le contenant (100),
c) l'insertion du contenant (100) dans le dispositif de façonnage (11, 21, 41),
d) l'introduction de l'au moins un réactif à partir du contenant (100) directement dans la cavité (16, 24, 43), l'au moins un réactif traversant une unité de mélange (3), qui fait partie du contenant (100), l'au moins un matériau de renforcement étant au moins partiellement pénétré par l'au moins un réactif,
e) le durcissement de l'au moins un réactif avec l'au moins un matériau de renforcement pour former un composant en matière plastique renforcé, et
f) le démoulage du composant en matière plastique renforcé.

2. Procédé selon la revendication 1, dans lequel, dans l'étape b), au moins un premier réactif est mis à disposition dans un premier contenant (100a) et un deuxième réactif dans un deuxième contenant (100b).

3. Procédé selon la revendication 2, dans lequel, avant l'étape d), au moins le premier réactif à partir du premier contenant (100a) ou d'une première chambre (1) du contenant (100) et le deuxième réactif à partir du deuxième contenant (100b) ou d'une deuxième chambre (2) du contenant (100) sont mélangés l'un avec l'autre dans une unité de mélange (3).

4. Procédé selon l'une quelconque des revendications 1 à 3, dans lequel le volume de l'au moins un réactif correspond essentiellement au volume libre de la cavité (16, 24, 43) du dispositif de façonnage (11, 21, 41).

5. Procédé selon l'une quelconque des revendications 1 à 4, dans lequel le réactif est activé avant l'étape c), dans l'étape d) ou avant l'étape e), notamment thermiquement, chimique et/ou mécaniquement.

6. Procédé selon l'une quelconque des revendications 1 à 5, dans lequel l'au moins un réactif contient en outre un activateur et/ou un catalyseur.

7. Procédé selon l'une quelconque des revendications 2 à 6, dans lequel le premier réactif dans le premier contenant (100a) contient en outre un activateur et/ou le deuxième réactif dans le deuxième contenant (100b) contient en outre un catalyseur.

8. Procédé selon l'une quelconque des revendications 1 à 5, dans lequel, dans l'étape c), au moins un activateur et/ou au moins un catalyseur sont ajoutés à l'au moins un réactif.

9. Procédé selon l'une quelconque des revendications 1 à 8, dans lequel l'introduction dans l'étape d) a lieu au moyen d'un piston (4), au moyen d'une sous-pression dans la cavité (16) ou au moyen d'un cylindre d'écrasement, qui agit sur l'au moins un réactif dans le contenant (100).

10. Procédé selon l'une quelconque des revendications 1 à 9, dans lequel le ou les contenants (100) sont choisis dans le groupe constitué par un sachet tubulaire, un sachet à chambre double, une cartouche, une capsule, un fût, un bécher, un cylindre, une boîte, une dosette et des combinaisons de ceux-ci.

11. Procédé selon l'une quelconque des revendications 1 à 9, dans lequel l'au moins un réactif mis à disposition dans l'étape b) comprend du caprolactame.

12. Dispositif pour la fabrication de composants en matière plastique renforcés, comprenant :
- au moins une cavité (16, 24, 43) d'un dispositif de façonnage (11, 21, 41) pour la réception d'un matériau de renforcement,
- un dispositif de réception pour au moins un contenant (100) pour au moins un réactif, le contenant (100) étant conçu aussi bien pour l'entreposage et le stockage que pour le transport et pour l'introduction de l'au moins un réactif dans la cavité (16, 24, 43),
- un dispositif de distribution pour la distribution de l'au moins un réactif à partir du contenant (100) directement dans la cavité (16, 24, 43) et
- une unité de mélange (3), qui fait partie du contenant (100), pour l'au moins un réactif, qui est agencée entre le dispositif de réception et la cavité (16, 24, 43).

13. Dispositif selon la revendication 12, dans lequel le dispositif de réception comprend au moins un appareil pour l'activation de l'au moins un réactif dans l'au moins un contenant.

14. Dispositif selon la revendication 12 ou 13, comprenant au moins une première cavité (24, 43) et une deuxième cavité (29, 44) du dispositif de façonnage (21, 41), l'au moins une première cavité (29, 44) présentant un volume différent de l'au moins une deuxième cavité (24, 43).
